# EUROPÄISCHE PATENTSCHRIFT

(11) **EP 2 817 103 B1**
(45) Veröffentlichungstag und Bekanntmachung des Hinweises auf die Patenterteilung: **20.04.2016**
(21) Anmeldenummer: 13705181.9
(22) Anmeldetag: 20.02.2013
(51) Int. Cl.: B05D 7/00, C08J 7/04, C09D 167/00

(54) **MEHRSCHICHT-BESCHICHTUNG MIT EINER FÜLLERSCHICHT AUS EINEM NICHT-WÄSSRIGEN BESCHICHTUNGSSTOFF ENTHALTEND MINDESTENS ZWEI VERSCHIEDENE POLYESTER**
MULTILAYER COATING WITH A FILLER LAYER MADE OF A NON-AQUEOUS COATING MATERIAL CONTAINING AT LEAST TWO DIFFERENT POLYESTERS
REVÊTEMENT MULTICOUCHE COMPRENANT UNE COUCHE DE REMPLISSAGE CONSTITUÉE D'UN MATÉRIAU DE REVÊTEMENT NON AQUEUX CONTENANT AU MOINS DEUX POLYESTERS DIFFÉRENTS

(30) Priorität: 21.02.2012 US 201261601054 P; 21.02.2012 EP 12156356
(43) Veröffentlichungstag der Anmeldung: 31.12.2014
(73) Patentinhaber: BASF Coatings GmbH, 48165 Münster (DE)
(72) Erfinder: WONNEMANN, Heinrich, 48291 Telgte (DE); OBERHOFF, Markus, 48317 Drensteinfurt (DE); RIEPING, Martin, 48317 Drensteinfurt (DE); PODLASKI-PYZIK, Beate, 48165 Münster (DE); MORCILLO RUIZ, Carole, F-60260 Lamorlaye (FR); HARTUNG, Michael, 59590 Geseke (DE)
(86) Internationale Anmeldenummer: PCT/EP2013/053386
(87) Internationale Veröffentlichungsnummer: WO 2013/124322

(56) Entgegenhaltungen:
- EP-A1- 0 250 052
- WO-A1-98/47974
- WO-A1-2009/086034
- DE-A1-102008 016 050

## Beschreibung

### Gebiet der Erfindung

Die Erfindung betrifft eine Mehrschicht-Beschichtung mit einer Füllerschicht aus einem nicht-wässrigen, lösemittelbasierten Beschichtungsstoff auf Polyesterbasis. Die Erfindung betrifft außerdem ein Verfahren zur Herstellung der Mehrschicht-Beschichtung, sowie mit der Mehrschicht-Beschichtung beschichtete Substrate, insbesondere Automobilkarosserien.

### Stand der Technik

Nicht-wässrige lösemittelbasierte (d.h. "konventionelle") Beschichtungsstoffe auf Polyesterbasis zur Herstellung von Lackierungen (Beschichtungen) sind bekannt. In der Automobilserienlackierung sowie in der Automobil-Reparaturlackierung werden üblicherweise Mehrschicht-Beschichtungen verwendet, die beispielsweise aus einer Elektrotauchlackschicht, einer Füllerschicht, einer Basislackschicht und einer Klarlackschicht bestehen können. An die Mehrschicht-Beschichtung werden hohe Anforderungen z.B. hinsichtlich der Steinschlagfestigkeit und der Beständigkeit gegenüber Schadsubstanzen wie Vogelkot gestellt. Insbesondere die Füllerschicht muss neben einer guten Schleifbarkeit, gutem Glätten des Untergrunds (guter Füllfähigkeit) und guter Haftung zum Untergrund sowie zu darüberliegenden Lackschichten auch zu einer sehr guten Steinschlagfestigkeit und hohen Vogelkot-Beständigkeit beitragen.

Bisherige konventionelle Füller-Formulierungen, wie sie beispielsweise aus "Automotive Paints and Coatings" ("Primer Surfacer"; Streitberger und Dössel, Wiley-VCH 2008 bekannt sind, erfüllen zwar im Rahmen einer Mehrschicht-Beschichtung die üblichen Steinschlagschutz-Spezifikationen der meisten Automobilhersteller, jedoch nicht gleichzeitig die Anforderungen an die Vogelkot-Beständigkeit. Agressive Substanzen aus dem Vogelkot können durch die oberen Lackschichten bis zur Füllerschicht vordringen und führen bei den bisherigen konventionellen Füller-Formulierungen häufig zur Enthaftung zwischen Füller- und Basislackschicht und damit zum Abplatzen des Lacks.

Die WO 2009/086034 A1 beschreibt ein Verfahren zur Herstellung einer Mehrschicht-Beschichtung, umfassend die Schritte i) Aufbringen einer Füllerschicht auf ein gegebenenfalls vorbehandeltes Substrat, ii) Härten der Füllerschicht, iii) Aufbringen einer Basislackschicht auf die gehärtete Füllerschicht, iv) Härten der Basislackschicht, v) Aufbringen einer Klarlackschicht auf die gehärtete Basislackschicht und vi) Härten der Lackschicht.

### Aufgabe

Aufgabe der vorliegenden Erfindung war es daher, eine Mehrschicht-Beschichtung umfassend eine Füllerschicht, eine Basislackschicht und eine Klarlackschicht, bereitzustellen, die eine sehr gute Steinschlagfestigkeit und gleichzeitig eine hohe Vogelkot-Beständigkeit aufweist. Die Mehrschicht-Beschichtung soll insbesondere zur Automobil-Serienlackierung geeignet sein. Daneben soll der Beschichtungsstoff, aus dem die Füllerschicht erhalten wird, eine ausreichende Lagerstabilität aufweisen.

### Lösung

Die Aufgabe wird überraschenderweise gelöst durch eine Mehrschicht-Lackierung, die nach einem Herstellverfahren erhältlich ist umfassend die Schritte
i) Aufbringen einer Füllerschicht (I) auf ein gegebenenfalls vorbehandeltes Substrat,
ii) Härten der Füllerschicht (II),
iii) Aufbringen einer Basislackschicht (II) auf die gehärtete Füllerschicht (I),
iv) gegebenenfalls Härten der Basislackschicht (II),
v) Aufbringen einer Klarlackschicht (III) auf die gehärtete oder ungehärtete Basislackschicht (II), und
vi) Härten der Klarlackschicht (III) oder der Basislack- und der Klarlackschicht, falls die Basislackschicht noch nicht in Schritt iv) gehärtet wurde,
wobei die Füllerschicht (I) durch Aufbringen eines nicht-wässrigen, lösemittelhaltigen Beschichtungsstoffs (F) erhalten wird, der
mindestens 20 Gew.-%, bezogen auf den gesamten Beschichtungsstoff (F), mindestens eines organischen Lösemittels sowie
   A1) mindestens 8 Gew.-%, bezogen auf den gesamten Beschichtungsstoff (F), mindestens eines ersten Polyesters (A1) mit einer Glasübergangstemperatur von mindestens 20°C und einer Säurezahl von 0 bis 40 mg KOH/g,
   A2) mindestens 8 Gew.-%, bezogen auf den gesamten Beschichtungsstoff (F), mindestens eines zweiten, von (A1) verschiedenen Polyesters (A2) mit einer Glasübergangstemperatur von höchstens 10°C,
   B) mindestens einen Vernetzer (B), und
   C) mindestens 8 Gew.-%, bezogen auf den gesamten Beschichtungsstoff (F), eines oder mehrerer Füllstoffe und/oder Pigmente (C)
enthält.

Die so erhaltenen Mehrschicht-Beschichtungen sind insbesondere zur Automobil-Serienlackierung geeignet. Insbesondere war es überraschend, dass die so erhaltenen Mehrschicht-Beschichtungen gleichzeitig eine sehr gute Steinschlagfestigkeit und eine hohe Vogelkot-Beständigkeit aufweisen. Des Weiteren ist auch die Lagerstabilität der Beschichtungsstoffe (F) ausreichend.

Gegenstand der Erfindung sind somit das oben geschilderte Verfahren zur Herstellung von Mehrschicht-Beschichtungen, die so erhältlichen Mehrschicht-Beschichtungen sowie mit diesen Mehrschicht-Beschichtungen beschichtete Substrate.

### Mehrschicht-Beschichtung

Die Mehrschicht-Beschichtung umfasst mindestens eine Füllerschicht (I), eine Basislackschicht (II) und eine Klarlackschicht (III).

Die Füllerschicht (I) wird durch Aufbringen eines nicht-wässrigen, lösemittelhaltigen Beschichtungsstoffs (F) erhalten, der weiter unten genauer beschrieben wird.

Die Basislackschicht (II) wird durch Aufbringen eines üblichen und bekannten Basislacks erhalten. Unter einem Basislack wird ein pigmentierter Beschichtungsstoff verstanden, der üblicherweise ein oder mehrere Bindemittel, Vernetzer und Pigmente enthält. Geeignete Basislacke sind die üblichen in der Automobil-Lackierung verwendeten pigmentierten Basislacke. Es können sowohl Wasserbasislacke als auch konventionelle, lösemittelhaltige Basislacke verwendet werden. Bevorzugt wird die Basislackschicht (II) durch Aufbringen eines Wasserbasislacks erhalten.

Die Klarlackschicht (III) wird durch Aufbringen eines üblichen und bekannten Klarlacks erhalten. Unter einem Klarlack wird ein Beschichtungsstoff verstanden, der eine transparente Beschichtung ergibt und im Allgemeinen keine Pigmente oder Füllstoffe enthält, allenfalls Farbstoffe oder sehr feinteilige, transparente Pigmente. Es können sowohl lösemittelhaltige als auch wässrige Klarlacke verwendet werden. Es können sowohl 1-Komponenten- als auch Mehrkomponenten-Klarlacke verwendet werden.

Das Aufbringen der Basislackschicht (II) und der Klarlackschicht (III) kann nach den üblichen und bekannten Methoden, insbesondere durch Spritzen oder Sprühen, erfolgen. Das Aufbringen erfolgt bevorzugt in den für die Automobil-Serienlackierung üblichen Schichtdicken, wie beispielsweise je 10 bis 80 Mikrometer, insbesondere 20 bis 70 Mikrometer, Trockenfilmschichtdicke.

Die Härtung der Basislackschicht (II) und der Klarlackschicht (III) kann getrennt oder gemeinsam erfolgen. Die Härtung weist keine methodischen Besonderheiten auf, sondern kann nach den üblichen und bekannten Verfahren erfolgen. Beispielsweise kann die Härtung thermisch oder mit aktinischer Strahlung oder thermisch und mit aktinischer Strahlung erfolgen. Werden Basislackschicht (II) und Klarlackschicht (III) gemeinsam gehärtet, so kann die Basislackschicht (II) vor dem Aufbringen der Klarlackschicht (III) nach den üblichen Verfahren abgelüftet werden, ohne sie vollständig zu härten.

### Beschichtungsstoff (F) und Füllerschicht (I)

Die Füllerschicht (I) wird durch Aufbringen des nicht-wässrigen, lösemittelhaltigen Beschichtungsstoffs (F) auf ein gegebenenfalls vorbehandeltes Substrat erhalten.

Unter einem nicht-wässrigen Beschichtungsstoff wird ein Beschichtungsstoff verstanden, der maximal 1 Gew.-%, bezogen auf den gesamten Beschichtungsstoff, an Wasser enthält.

Der Beschichtungsstoff (F) ist lösemittelbasiert. Dies bedeutet, dass er mindestens 20 Gew.-%, bevorzugt mindestens 30 Gew.-%, jeweils bezogen auf den gesamten Beschichtungsstoff, mindestens eines organischen Lösemittels enthält. In einer weiteren Ausführungsform der vorliegenden Erfindung können auch mindestens 40 Gew.-% an organischen Lösemitteln, bezogen auf den gesamten Beschichtungsstoff, enthalten sein. Als organische Lösemittel sind die üblichen, in Beschichtungsstoffen verwendeten und bekannten organischen Lösemittel geeignet. Beispiele für gut geeignete organische Lösemittel sind unter anderem n- und i-Butanol, Butyldiglykolacetat, n-Butylacetat, Solventnaphtha und Xylol. Es können beispielsweise auch weitere aromatische Kohlenwasserstoffe, Isopropylbenzol, Ethylbenzol, Mesitylen, n-Propylbenzol, 1,2,4-Trimethylbenzol, Cyclohexan, Methanol, 2-Butoxyethanol, destilliertes Propylencarbonat, Butylglykolacetat, Tosylchlorid, Formaldehyd und/oder Naphthalin als organische Lösemittel eingesetzt werden.

Der Festkörper des Beschichtungsstoffs (F) liegt bevorzugt bei 58-68%, besonders bevorzugt bei 60-66%. Für die Spritz- oder Sprühapplikation wird der Beschichtungsstoff (F) dann bevorzugt mit einem geeigneten Lösemittel auf 5-16%, besonders bevorzugt auf 8-12% eingestellt. Die Einstellung des Festkörpers kann durch die Verdünnung mit geeigneten organischen Lösemitteln erfolgen. Der Festkörper des Beschichtungsstoffs wird als der nichtflüchtige Anteil (%) einer 1g-Probe nach Temperung bei 105°C für 180 Minuten bestimmt.

Die Glasübergangstemperatur des Beschichtungsstoffs (F), gemessen mittels DSC (Differential-Scanning-Calorimetry, Dynamische Differenzkalorimetrie), beträgt vorzugsweise mindestens 35°C, besonders bevorzugt mindestens 40°C. Die Messung der Glasübergangstemperatur erfolgt mittels DSC an einer Probe mit ursprünglich 50 Mikrometern Nasschichtdicke, die 60 Minuten bei 130°C getrocknet wurde. Man lässt den getrockneten Film zunächst auf Raumtemperatur abkühlen. Dann wird der Film in der DSC-Anlage auf -80°C gekühlt, von dort auf +80°C erwärmt, wieder auf -80°C gekühlt und schließlich wieder auf +80°C erwärmt. Die Heiz- und Kühlraten betragen jeweils 10°C pro Minute. Ausgewertet wird der Midpoint des zweiten Heizlaufs, aus dem sich die Glasübergangstemperatur Tg ablesen lässt.

Die Anforderungen an die Vogelkot-Beständigkeit werden besonders gut erfüllt, wenn die Glasübergangstemperatur des Beschichtungsstoffs (F) entsprechend hoch ist.

Der Beschichtungsstoff (F) weist bevorzugt ein Gewichtsverhältnis von Füllstoffen und/oder Pigmenten (C) zu Bindemitteln (A1, A2, B) von 0,5 - 1,2, besonders bevorzugt von 0,7-0,9 auf. Zur Berechnung werden die eingesetzten Festkörper-Massen von A1, A2, B und C verwendet. Die Festkörper von A1, A2, B und C werden jeweils als nichtflüchtige Anteile bestimmt und durch die Trocknung einer ca. 2g-Probe auf einem Deckel, der 60 Minuten bei 130°C unter Zusatz von 2 ml Xylol in einem Umluftofen getempert wird, gemessen.

Der Beschichtungsstoff (F) weist bevorzugt ein Gewichtsverhältnis von Polyester (A1) zu Polyester (A2) von 0,7 bis 1,2 auf, besonders bevorzugt von 0,9 bis 1,1. Zur Berechnung werden die eingesetzten Festkörper-Massen von A1 und A2 verwendet. Die Festkörper von A1 und A2 werden jeweils als nichtflüchtige Anteile bestimmt und durch die Trocknung einer ca. 2g-Probe auf einem Deckel, der 60 Minuten bei 130°C unter Zusatz von 2 ml Xylol in einem Umluftofen getempert wird, gemessen.

### Polyester (A1) (mit hoher Glasübergangstemperatur)

Der Beschichtungsstoff (F) enthält mindestens 8 Gew.-%, bezogen auf den gesamten Beschichtungsstoff, mindestens eines ersten Polyesters (A1) mit einer Glasübergangstemperatur, gemessen mittels DSC, von mindestens 20°C. Geeignete Polyester (A1) können beispielsweise aus der Umsetzung von Di- und/oder Polyolen mit Di- und/oder Polycarbonsäuren erhalten werden. Es können auch Gemische ein oder mehrerer Di- und/oder Polyole und ein oder mehrerer Di- und/oder Polycarbonsäuren eingesetzt werden. Anstelle der Di- und/oder Polycarbonsäuren können auch ihre Anhydride oder ihre Ester mit leichtflüchtigen Alkoholen (insbesondere Dimethylterephthalat) eingesetzt werden. Es können zusätzlich auch Anteile von Monocarbonsäuren und/oder Monoalkoholen eingesetzt werden.

Geeignete Diole sind beispielsweise lineare, cyclische und/oder verzweigte Alkandiole mit 2 bis 22 Kohlenstoffatomen und primären und/oder sekundären Hydroxylgruppen wie beispielsweise Ethylenglykol, 1,2-Propandiol (Propylenglykol), 1,3-Propandiol, 1,2,-Butandiol, 1,3-Butandiol, 1,4-Butandiol, 1,2-Pentandiol, 1,3-Pentandiol, 1,4-Pentandiol, 1,5-Pentandiol, 1-Methyl-2,3-propandiol, Neopentylglykol, 1,6-Hexandiol, 1,4-Cyclohexandimethanol (ggf. in Mischung mit seinem 1,3-Isomer), Tricyclodecandimethanol (TCD-Alkohol DM) sowie weitere lineare, cyclische und/oder verzweigte Alkandiole; dihydroxyfunktionelle Ether wie beispielsweise Diethylenglykol, Triethylenglykol, weitere Polyethylenglykole, Dipropylenglykol, Tripropylenglykol, weitere Polypropylenglykole oder gemischte Polyethylen-Polypropylen-Glykole mit aromatischen Struktureinheiten wie beispielsweise Bisphenol A oder Bisphenol F; dihydroxyfunktionelle Ester wie beispielsweise Hydroxypivaloylsäureneopentylglykolester; sowie Glycidylester verzweigter Monocarbonsäuren, z.B. der Versaticsäure.

Darunter bevorzugte Diole sind cyclische und verzweigte Diole mit bevorzugt 3 bis 14 Kohlenstoffatomen. Besonders bevorzugte Diole sind Hydroxypivaloylsäureneopentylglykolester und Neopentylglykol.

Geeignete Polyole sind beispielsweise Triole wie beispielsweise Trimethylolpropan, Trimethylolethan oder Glycerin, sowie auch höherwertige Alkohole, wie beispielsweise Pentaerythrit.

Geeignete Dicarbonsäuren sind beispielsweise gesättigte oder ungesättigte, lineare oder verzweigte, cycloaliphatische oder aliphatische Dicarbonsäuren mit 3 bis 22 Kohlenstoffatomen sowie aromatische Dicarbonsäuren, wie beispielsweise Adipinsäure, Sebacinsäure, Alkenylbernsteinsäuren wie z.B. Tetrapropenylbernsteinsäure, Dodecenylbernsteinsäure, Phthalsäure, Isophthalsäure, Tetrahydrophthalsäure, Hexahydrophthalsäure oder Terephthalsäure. Es können auch die jeweiligen Anhydride eingesetzt werden, also beispielsweise Phthalsäureanhydrid, Tetrapropenylbernsteinsäureanhydrid, Dodecenylbernsteinsäureanhydrid, Tetrahydrophthalsäureanhydrid oder Hexahydrophthalsäureanhydrid.

Bevorzugt wird nur ein kleiner Anteil an linearen aliphatischen Dicarbonsäuren eingesetzt, vorzugsweise 0 - 5 Gew.-%, bezogen auf die insgesamt zur Herstellung des Polyesters (A1) eingesetzten Di- und/oder Polycarbonsäuren. Besonders bevorzugt werden zur Herstellung des Polyesters (A1) keine linearen aliphatischen Dicarbonsäuren eingesetzt.

Bevorzugte Dicarbonsäuren und deren Anhydride sind cycloaliphatische und aromatische Dicarbonsäuren, wie beispielsweise Phthalsäure, Phthalsäureanhydrid, Isophthalsäure, Tetrahydrophthalsäure, Tetrahydrophthalsäureanhydrid oder Terephthalsäure. Besonders bevorzugte Dicarbonsäuren und deren Anhydride sind Phthalsäureanhydrid, Isophthalsäure und Tetrahydrophthalsäureanhydrid.

Geeignete Polycarbonsäuren sind beispielsweise Trimellithsäure und andere Polycarbonsäuren. Es können auch die jeweiligen Anhydride eingesetzt werden, also beispielsweise Trimellithsäureanhydrid. Bevorzugte Polycarbonsäuren und deren Anhydride sind Trimellithsäure und Trimellithsäureanhydrid.

Die Umsetzung der Di- und/oder Polyole mit den Di- und/oder Polycarbonsäuren zur Herstellung eines Polyesters (A1) kann in einer oder auch in mehreren Stufen erfolgen. Besonders bevorzugte Polyester (A1) werden aus der Umsetzung von Hydroxypivaloylsäureneopentylglykolester, Neopentylglykol, Isophthalsäure und Tetrahydrophthalsäureanhydrid und nachfolgende Umsetzung des Produkts mit Trimellithsäureanhydrid und Phthalsäureanhydrid erhalten.

Die Polyester (A1) weisen funktionelle Gruppen auf, welche mit den Vernetzermolekülen (B) eine Vernetzungsreaktion eingehen können. Hierunter fallen insbesondere isocyanatreaktive Gruppen sowie mit Aminoplastharzen reaktive Gruppen. Geeignete funktionelle Gruppen sind beispielsweise Hydroxylgruppen, Epoxygruppen, Carboxylgruppen, Aminogruppen und Harnstoffgruppen. Bevorzugte funktionelle Gruppen des Polyesters (A1) sind Hydroxylgruppen.

Bevorzugt weisen die Polyester (A1) eine Hydroxylzahl von 50 bis 150 mg KOH/g, besonders bevorzugt von 80 bis 120 mg KOH/g auf, jeweils bezogen auf den Festkörper (nichtflüchtigen Anteil) des jeweiligen Polyesters (A1), der nach Trocknung bei 130°C für 60 Minuten bestimmt wird.

Die Polyester (A1) weisen eine Säurezahl von 0 bis 40 mg KOH/g, bevorzugt von 5 bis 30 mg KOH/g, besonders bevorzugt von 0 bis 25 mg KOH/g auf, jeweils bezogen auf den Festkörper (nichtflüchtigen Anteil) des jeweiligen Polyesters (A1), der nach Trocknung bei 130°C für 60 Minuten bestimmt wird. Bei einer zu hohen Säurezahl des oder der eingesetzten Polyester (A1) ist eine ausreichende Lagerstabilität des Beschichtungsstoffs nicht mehr gewährleistet. Die Säurezahl wird im Rahmen der vorliegenden Erfindung gemäß DIN EN ISO 3682 bestimmt.

Das zahlenmittlere Molekulargewicht (Mn) des ersten Polyesters (A1) liegt bevorzugt zwischen 1 000 g/mol und 10 000 g/mol, besonders bevorzugt zwischen 1 000 g/mol und 5 000 g/mol.

Das gewichtsmittlere Molekulargewicht (Mw) des ersten Polyesters (A1) liegt bevorzugt zwischen 1 000 g/mol und 50 000 g/mol, besonders bevorzugt zwischen 2500 g/mol und 15 000 g/mol.

Die Polydispersität (Mw/Mn) des ersten Polyesters (A1) liegt bevorzugt bei 5 oder darunter, besonders bevorzugt bei 3,5 oder darunter.

Das zahlen- und gewichtsmittlere Molekulargewicht wird mittels Gelpermeationschromatographie nach DIN 55672-1 (Ausgabe 2007-08) für THF-lösliche Polymere unter Verwendung von Tetrahydrofuran (+ 0,1% Essigsäure) als Elutionsmittel über einer Styrol-Divinylbenzol-Säulenkombination (Waters HR4,HR3,HR2) bestimmt. Die Kalibrierung erfolgt mittels Polystyrol-Standards.

Die Glasübergangstemperatur des ersten Polyesters (A1), gemessen mittels DSC, beträgt mindestens 20°C, bevorzugt mindestens 25°C.

Vorzugsweise enthält der Beschichtungsstoff (F) mindestens 9 Gew.-%, insbesondere mindestens 10 Gew.-%, bezogen auf den gesamten Beschichtungsstoff (F), des mindestens einen Polyesters (A1). Der maximale Gewichtsanteil des Polyesters (A1) wird letztlich durch den Gehalt der weiteren im Beschichtungsstoff enthaltenen Komponenten begrenzt. Der Gewichtsanteil des Polyesters (A1) liegt beispielsweise unterhalb von 30 Gew.-%, insbesondere bevorzugt unterhalb von 20 Gew.-%.

Besonders bevorzugt enthält der Beschichtungsstoff (F) mindestens 9 Gew.-%, insbesondere mindestens 10 Gew.-%, bezogen auf den gesamten Beschichtungsstoff (F), mindestens eines Polyesters (A1) mit einer Glasübergangstemperatur, gemessen mittels DSC, von mindestens 20°C, ganz besonders bevorzugt von mindestens 25°C.

### Polyester (A2) (mit niedrigerer Glasübergangstemperatur)

Der Beschichtungsstoff (F) enthält des weiteren mindestens 8 Gew.-%, bezogen auf den gesamten Beschichtungsstoff (F), mindestens eines zweiten Polyesters (A2), der von dem Polyester (A1) verschieden ist und eine Glasübergangstemperatur, gemessen mittels DSC, von höchstens 10°C aufweist. Geeignete Polyester (A2) können beispielsweise aus der Umsetzung von Di- und/oder Polyolen mit Di- und/oder Polycarbonsäuren erhalten werden. Es können auch Gemische ein oder mehrerer Di- und/oder Polyole und ein oder mehrerer Di- und/oder Polycarbonsäuren eingesetzt werden. Es können zusätzlich auch Anteile von Monocarbonsäuren und/oder Monoalkoholen eingesetzt werden.

Geeignete Diole sind beispielsweise lineare, cyclische und/oder verzweigte Alkandiole mit bevorzugt 2 bis 14 Kohlenstoffatomen und primären und/oder sekundären Hydroxylgruppen wie beispielsweise Ethylenglykol, 1,2-Propandiol (Propylenglykol), 1,3-Propandiol, 1,2,-Butandiol, 1,3-Butandiol, 1,4-Butandiol, 1,2-Pentandiol, 1,3-Pentandiol, 1,4-Pentandiol, 1,5-Pentandiol, Neopentylglykol, 1,6-Hexandiol, 1,4-Cyclohexandimethanol (ggf. in Mischung mit weiteren Isomeren) sowie weitere lineare, cyclische und/oder verzweigte Alkandiole; dihydroxyfunktionelle Ether wie beispielsweise Diethylenglykol, Triethylenglykol, weitere Polyethylenglykole, Dipropylenglykol, Tripropylenglykol, weitere Polypropylenglykole oder gemischte Polyethylen-Polypropylen-Glykole oder Polyglykole mit aromatischen Struktureinheiten wie beispielsweise Bisphenol A oder Bisphenol F; dihydroxyfunktionelle Ester wie beispielsweise Hydroxypivaloylsäureneopentylglykolester; sowie "Dimerdiole", die durch Reduktion dimerisierter Fettsäuren erzeugt werden (z.B. Pripol® 2033 der Firma Uniqema).

Darunter bevorzugte Diole sind lineare, cyclische und/oder verzweigte Alkandiole mit 4 - 8 Kohlenstoffatomen wie beispielsweise Neopentylglykol oder 1,4-Cyclohexandiol, sowie Polyglykole mit aromatischen Struktureinheiten, wie beispielsweise ethoxylierte Bisphenol-A-Derivate (z.B. Pluriol® BP40 / Dianol® 240, ein Addukt von 4 Mol Ethylenoxid an Bisphenol A).

Besonders bevorzugte Diole sind Neopentylglykol und ethoxylierte Bisphenol-A-Derivate.

Geeignete Polyole sind beispielsweise Triole wie beispielsweise Trimethylolpropan, Trimethylolethan oder Glycerin, sowie auch höherwertige Alkohole, wie beispielsweise Pentaerythrit. Ein bevorzugtes Polyol ist Trimethylolpropan.

Geeignete Dicarbonsäuren sind beispielsweise gesättigte oder ungesättigte, lineare oder verzweigte, cycloaliphatische oder aliphatische Dicarbonsäuren mit 3 bis 22 Kohlenstoffatomen sowie aromatische Dicarbonsäuren, wie beispielsweise Adipinsäure, Sebacinsäure, Phthalsäure, Isophthalsäure, Tetrahydrophthalsäure oder Terephthalsäure; sowie Dimerfettsäuren auf pflanzlicher oder tierischer Basis, die auch durch Hydrierung ungesättigter Bindungen modifiziert sein können und/oder durch Destillation gereinigt sein können, wie beispielsweise Pripol®1010, Pripol®1012 oder Pripol®1022. Es können auch die jeweiligen Anhydride eingesetzt werden, also beispielsweise Phthalsäureanhydrid, Isophthalsäureanhydrid oder Tetrahydrophthalsäureanhydrid. Bevorzugte Dicarbonsäuren und deren Anhydride sind cycloaliphatische und aromatische Dicarbonsäuren wie Phthalsäure, Phthalsäureanhydrid, Isophthalsäure, Isophthalsäureanhydrid, Tetrahydrophthalsäure, Tetrahydrophthalsäureanhydrid, Terephthalsäure oder Terephthalsäure-anhydrid. Besonders bevorzugte Dicarbonsäuren und deren Anhydride sind Phthalsäure, Phthalsäureanhydrid, Isophthalsäure, Isophthalsäureanhydrid, Tetrahydrophthalsäure und Tetrahydrophthalsäureanhydrid.

Eine geeignete Polycarbonsäure ist beispielsweise Trimellithsäure. Es können auch die jeweiligen Anhydride eingesetzt werden, also beispielsweise Trimellithsäureanhydrid.

Die Umsetzung der Di- und/oder Polyole mit den Di- und/oder Polycarbonsäuren zur Herstellung eines Polyesters (A2) kann in einer oder auch in mehreren Stufen erfolgen. Besonders bevorzugte Polyester (A2) werden aus der Umsetzung von ethoxylierten Bisphenol-A-Derivaten (z.B. erhältlich unter der Handelsbezeichnung Pluriol® BP40E der BASF SE), Neopentylglykol und Trimethylolpropan mit Adipinsäure und Trimellithsäureanhydrid erhalten. Die Polyester (A2) können des weiteren in einem nachgeschalteten Schritt durch die Addition von Lactonen, besonders von Caprolacton, modifiziert werden. Hierdurch resultiert üblicherweise eine erniedrigte Glasübergangstemperatur (Tg) der Polyester.

Die Polyester (A2) weisen funktionelle Gruppen auf, welche mit den Vernetzermolekülen (B) eine Vernetzungsreaktion eingehen können. Hierunter fallen insbesondere isocyanatreaktive Gruppen sowie mit Aminoplastharzen reaktive Gruppen. Geeignete funktionelle Gruppen sind beispielsweise Hydroxylgruppen, Epoxygruppen, Carboxylgruppen, Aminogruppen oder Harnstoffgruppen. Bevorzugte funktionelle Gruppen des Polyesters (A2) sind Hydroxylgruppen.

Bevorzugt weisen die Polyester (A2) eine Hydroxylzahl von 60 bis 130 mg KOH/g, besonders bevorzugt von 70 bis 110 mg KOH/g, ganz besonders bevorzugt von 80 bis 100 mg KOH/g auf, jeweils bezogen auf den Festkörper (nichtflüchtigen Anteil) des jeweiligen Polyesters (A2), der nach Trocknung bei 130°C für 60 Minuten bestimmt wird.

Bevorzugt weisen die Polyester (A2) eine Säurezahl zwischen 5 und 50 mg KOH/g auf, ganz besonders bevorzugt zwischen 5 und 20 mg KOH/g, jeweils bezogen auf den Festkörper (nichtflüchtigen Anteil) des jeweiligen Polyesters (A2), der nach Trocknung bei 130°C für 60 Minuten bestimmt wird. Bei einer zu hohen Säurezahl des oder der eingesetzten Polyester (A2) ist eine ausreichende Lagerstabilität des Beschichtungsstoffs nicht mehr gewährleistet.

Das zahlenmittlere Molekulargewicht (Mn) des zweiten Polyesters (A2) liegt bevorzugt zwischen 1000 g/mol und 10000 g/mol, besonders bevorzugt zwischen 1000 g/mol und 5000 g/mol.

Das gewichtsmittlere Molekulargewicht (Mw) des zweiten Polyesters (A2) liegt bevorzugt zwischen 5000 g/mol und 80000 g/mol, besonders bevorzugt zwischen 10000 g/mol und 60000 g/mol.

Die Polydispersität (Mw/Mn) des zweiten Polyesters (A2) liegt bevorzugt bei 5 oder darüber, besonders bevorzugt bei 8 oder darüber.

Das zahlen- und gewichtsmittlere Molekulargewicht wird mittels Gelpermeationschromatographie nach DIN 55672-1 (Ausgabe 2007-08) für THF-lösliche Polymere unter Verwendung von Tetrahydrofuran (+ 0,1% Essigsäure) als Elutionsmittel über einer Styrol-Divinylbenzol-Säulenkombination (Waters HR4,HR3,HR2) bestimmt. Die Kalibrierung erfolgt mittels Polystyrol-Standards.

Vorzugsweise enthält der Beschichtungsstoff (F) mindestens 9 Gew.-%, bezogen auf den gesamten Beschichtungsstoff, des mindestens einen Polyesters (A2). Der maximale Gewichtsanteil des Polyesters (A2) wird letztlich durch den Gehalt der weiteren im Beschichtungsstoff enthaltenen Komponenten begrenzt. Der Gewichtsanteil des Polyesters (A2) liegt beispielsweise unterhalb von 30 Gew.-%, insbesondere bevorzugt unterhalb von 20 Gew.-%.

Die Glasübergangstemperatur des zweiten Polyesters (A2), gemessen mittels DSC, ist von der Glasübergangstemperatur des ersten Polyesters (A1) verschieden und beträgt höchstens 10°C, bevorzugt höchstens 0°C und ganz besonders bevorzugt höchstens -10°C.

Liegt die Glasübergangstemperatur des zweiten Polyesters (A2) zu hoch, so werden die Anforderungen an die Steinschlag-Beständigkeit nicht mehr erfüllt.

### Vernetzer (B)

Der Beschichtungsstoff (F) enthält des weiteren mindestens einen Vernetzer (B). Als Vernetzer (B) sind alle Vernetzer geeignet, die mit funktionellen Gruppen der Polyester eine Vernetzungsreaktion eingehen können. Bevorzugt sind der oder die Vernetzer (B) ausgewählt aus der Gruppe bestehend aus blockierten Polyisocyanaten und Aminoplastharzen.

Unter blockierten Polyisocyanaten werden Verbindungen mit zwei oder mehr Isocyanatgruppen pro Molekül verstanden, deren Isocyanatgruppen mit üblichen und bekannten Blockierungsmitteln umgesetzt wurden. Die Blockierungsmittel werden erst bei erhöhter Temperatur wieder abgespalten, wobei die Isocyanatgruppen für eine Vernetzungsreaktion freigesetzt werden.

Unter Aminoplastharzen werden Polykondensationsharze aus Formaldehyd und Verbindungen mit primären und/oder sekundären Aminogruppen verstanden, insbesondere Melamin-Formaldehyd-Harze, Benzoguanamin-Formaldehyd-Harze und Harnstoff-Formaldehyd-Harze.

Bevorzugt enthält der Beschichtungsstoff (F) eine Kombination aus mindestens zwei verschiedenen Vernetzern (B), darunter vorzugsweise mindestens ein blockiertes Polyisocyanat und mindestens ein Aminoplastharz.

Geeignete blockierte Polyisocyanate sind beispielsweise aliphatische, cycloaliphatische, araliphatische und aromatische blockierte Polyisocyanate. Diese können beispielsweise aus der Umsetzung von Hexamethylendiisocyanat (HDI), dimerisiertem oder trimerisiertem HDI, Isophorondiisocyanat (IPDI), Toluylendiisocyanat (TDI), Diphenylmethandiisocyanat (MDI), hydriertem MDI (H₁₂MDI) oder Xylilendiisocyanat (XDI) mit geeigneten Blockierungsmitteln, wie beispielsweise Phenolen, Lactamen, CH-aciden Verbindungen oder Oximen, erhalten werden. Bevorzugte Blockierungsmittel sind Methylethylketoxim, N-Hydroxyphthalimid, 1,2,4-Triazol, Caprolactam, Diethylmalonat und 3,5-Dimethylpyrazol. Ein besonders bevorzugtes Blockierungsmittel ist Methylethylketoxim. Bevorzugt werden blockierte Polyisocyanate mit 2 bis 5 Isocyanatgruppen pro Molekül eingesetzt.

Unter den blockierten Polyisocyanaten werden aliphatische blockierte Polyisocyanate besonders bevorzugt, insbesondere solche auf der Basis von HDI und IPDI. Ganz besonders bevorzugt werden aliphatische blockierte Polyisocyanate auf der Basis von IPDI. Diese sind beispielsweise unter der Bezeichnung Desmodur® BL 4265 im Handel erhältlich.

Geeignete Aminoplastharze sind beispielsweise Melamin-Formaldehyd-Harze, Benzoguanamin-Formaldehyd-Harze und/oder Harnstoff-Formaldehyd-Harze, deren Methylolgruppen frei vorliegen oder teilweise oder ganz verethert vorliegen können. Zur Veretherung kommen beispielsweise kurzkettige Alkanole wie Methanol, Ethanol, Propanol, n-Butanol oder i-Butanol, insbesondere Methanol oder n-Butanol, in Frage.

Unter den Aminoplastharzen sind Melamin- und Benzoguanamin-Formaldehyd-Harze bevorzugt. Besonders bevorzugt sind mit Methanol teilveretherte Melamin-Formaldehyd-Harze (z.B. Resimene® HM 2608), mit n-Butanol teilveretherte Melamin-Formaldehyd-Harze (z.B. Luwipal® 018 BX) und mit n-Butanol veretherte Benzoguanamin-Formaldehyd-Harze (z.B. Luwipal® B 017).

Vorzugsweise enthält der Beschichtungsstoff (F) 5 bis 15 Gew.-%, bezogen auf den gesamten Beschichtungsstoff, des mindestens einen Vernetzers (B). Bevorzugt ist es weiterhin, wenn der Beschichtungsstoff (F) 25 bis 75 Gew.-%, insbesondere 35 bis 60 Gew.-%, jeweils bezogen auf die Summe der Festkörper der Bindemittel (A1) und (A2), eines oder mehrerer Vernetzer (B) enthält. Darunter bevorzugt ist eine Kombination von mindestens einem blockierten Polyisocyanat mit mindestens einem Aminoplastharz als Vernetzer (B). Das Gewichtsverhältnis zwischen blockiertem Polyisocyanat und Aminoplastharz liegt bevorzugt bei 0,5 bis 1,5, besonders bevorzugt bei 0,8 bis 1,2. In einer weiteren Ausführungsform der vorliegenden Erfindung enthält der Beschichtungsstoff (F) 25 bis 35 Gew.-%, bezogen auf die Summe der Festkörper der Bindemittel (A1) und (A2), eines oder mehrerer Vernetzer (B). Auch in dieser Ausführungsform ist eine Kombination von mindestens einem blockierten Polyisocyanat mit mindestens einem Aminoplastharz als Vernetzer (B) bevorzugt, wobei das Gewichtsverhältnis zwischen blockiertem Polyisocyanat und Aminoplastharz dabei bevorzugt bei 0,5 bis 1,5, besonders bevorzugt bei 0,8 bis 1,2 liegt.

### Füllstoffe und/oder Pigmente (C)

Bei dem Beschichtungsstoff (F) handelt es sich um eine Füllerzusammensetzung.

Der Beschichtungsstoff (F) enthält mindestens 8 Gew.-%, bezogen auf den gesamten Beschichtungsstoff (F), eines oder mehrerer Füllstoffe und/oder Pigmente (C). Bevorzugt enthält der Beschichtungsstoff (F) mindestens 11 Gew.-%, besonders bevorzugt mindestens 15 Gew.-%, jeweils bezogen auf den gesamten Beschichtungsstoff (F), eines oder mehrerer Füllstoffe und/oder Pigmente (C). Der maximale Gewichtsanteil der Füllstoffe und/oder Pigmente (C) wird letztlich durch den Gehalt der weiteren im Beschichtungsstoff enthaltenen Komponenten begrenzt. Der Gewichtsanteil liegt beispielsweise unterhalb von 40 Gew.-%, insbesondere bevorzugt unterhalb von 30 Gew.-%.

Der Beschichtungsstoff (F) weist bevorzugt ein Gewichtsverhältnis von Füllstoffen und/oder Pigmenten (C) zu Bindemitteln (A1, A2, B) von 0,5 - 1,2, besonders bevorzugt von 0,7-0,9 auf. Zur Berechnung werden die eingesetzten Festkörper-Massen von A1, A2, B und C verwendet. Die Festkörper von A1, A2, B und C werden jeweils als nichtflüchtige Anteile bestimmt und durch die Trocknung einer ca. 2g-Probe auf einem Deckel, der 60 Minuten bei 130°C unter Zusatz von 2 ml Xylol in einem Umluftofen getempert wird, gemessen.

Als Füllstoffe und/oder Pigmente (C) sind letztlich alle dem Fachmann in diesem Zusammenhang bekannten Füllstoffe und/oder Pigmente geeignet, beispielsweise solche aus der Gruppe bestehend aus
- Silikaten wie beispielsweise Magnesiumsilikathydraten (z.B. Talkum), Aluminiumsilikathydraten (z.B. Kaolin, China Clay) und Kaliumaluminiumsilikathydraten (z.B. Muskovit/Glimmer),
- Calciumcarbonaten (z.B. Kreide, Calcit, Marmor),
- Calcium-Magnesium-Carbonaten (z.B. Dolomit),
- Bariumcarbonat,
- Bariumsulfaten (z.B. Blanc fixe, Baryt, Schwerspat),
- Calciumsulfat,
- Aluminiumhydroxid, Magnesiumhydroxid,
- Ruß
- Titandioxid und
- Kieselsäuren (z.B. Quarz, Aerosil)
geeignet.

Bevorzugte Füllstoffe und/oder Pigmente sind darunter Kieselsäuren (z.B. Aerosil), Titandioxid und Blanc fixe. Besonders bevorzugte Füllstoffe und/oder Pigmente sind darunter Kieselsäuren und Blanc fixe.

### Weitere Bestandteile

Der Beschichtungsstoff (F) kann darüber hinaus weitere, von den Bestandteilen (A1), (A2), (B) und (C) verschiedene, lackübliche Bestandteile (D) in lacküblichen Mengen enthalten, die dem Fachmann bekannt sind. Beispiele geeigneter weiterer lacküblicher Bestandteile (D) sind von (A1) und (A2) verschiedene weitere Bindemittel, von (C) verschiedene farb- und/oder effektgebende Pigmente, thermisch und/oder thermisch und mit aktinischer Strahlung härtbare Reaktivverdünner, UV-Absorber, Lichtschutzmittel, Radikalfänger, Vernetzungskatalysatoren, Entlüftungsmittel, Slipadditive, Entschäumer, Emulgatoren, Netzmittel, Dispergiermittel, Haftvermittler, Verlaufmittel, sag control agents (SCA), Rheologiehilfsmittel, Flammschutzmittel, Sikkative und Korrosionsinhibitoren.

### Herstellung des Beschichtungsstoffs (F) und der Füllerschicht (I)

Die Herstellung des Beschichtungsstoffs (F) weist keine Besonderheiten auf, sondern kann durch Vermischen der Bestandteile nach den üblichen und bekannten Verfahren erfolgen.

Vorzugsweise weist der Beschichtungsstoff (F) eine solche Lagerstabilität auf, dass bei einer Lagerung bei 40°C über 4 Wochen die Viskosität maximal auf das Doppelte des unmittelbar nach der Herstellung ermittelten Ausgangswerts ansteigt. Die Viskosität wird gemessen mit einem Afnor-Auslaufbecher (4 mm) bei 23°C (Angabe in Sekunden).

Zur Herstellung der Füllerschicht (I) wird der Beschichtungsstoff (F) auf ein gegebenenfalls vorbehandeltes Substrat aufgebracht. Die Vorbehandlung kann den üblichen und bekannten Maßnahmen der Oberflächen-Vorbehandlungen für zu beschichtende Substrate, wie Reinigen, Aktivieren und/oder Vorbeschichten entsprechen. Das Substrat kann beispielsweise mit einer Elektrotauchlackschicht vorbeschichtet sein. Bei dem Substrat handelt es sich vorzugsweise um ein metallisches Substrat, bevorzugt um eine Automobilkarosserie oder ein Teil davon.

Der Auftrag des Beschichtungsstoffs (F) auf das Substrat kann mit den üblichen und bekannten Applikationsverfahren, wie beispielsweise Spritzen oder Sprühen, erfolgen. Vorzugsweise wird der Beschichtungsstoff durch Spritzen oder Sprühen auf das Substrat aufgetragen.

Der Beschichtungsstoff (F) kann in den üblichen und bekannten Schichtdicken auf das Substrat aufgetragen werden, vorzugsweise so, dass eine Trockenfilmschichtdicke von 30 - 60 Mikrometern, bevorzugt von 35 - 50 Mikrometern resultiert.

Die Härtung des Beschichtungsstoffs (F) auf dem Substrat weist ebenfalls keine methodischen Besonderheiten auf, sondern kann nach den üblichen und bekannten Verfahren erfolgen. Beispielsweise wird der Beschichtungsstoff (F) thermisch gehärtet. Vor der Härtung kann der Beschichtungsstoff (F) vorzugsweise kurz abgelüftet werden. Das Ablüften kann beispielsweise bei Raumtemperatur für einige Minuten geschehen.

Im Folgenden wird die Erfindung durch Beispiele näher erläutert, ohne den Gegenstand der Erfindung auf die Beispiele zu beschränken.

### Beispiele

### Messverfahren:

Die Viskosität wird, soweit nicht anders angegeben, mit einem Cap2000-Viskosimeter der Fa. Brookfield, das mit einer CAP-03-Spindel ausgestattet ist, bei 23°C und bei einer Scherrate von 5.000 s⁻¹ gemessen (soweit nicht anders angegeben).

Die nicht-flüchtigen Anteile (nfA) der einzelnen Polyester (A1) und (A2) und der Füllstoffe und/oder Pigmente (C) werden gemessen durch die Trocknung einer ca. 2g-Probe auf einem Deckel, der 60 Minuten bei 130°C unter Zusatz von 2 ml Xylol in einem Umluftofen getempert wird.

Der Festkörper des Beschichtungsstoffs wird als der nichtflüchtige Anteil (in %) einer 1g-Probe nach Temperung bei 105°C für 180 Minuten bestimmt.

Die Messung der Glasübergangstemperatur (Tg) erfolgt, wie oben bereits beschrieben, mittels DSC. Die Messbedingungen für die Bestimmung der Tg des Beschichtungsstoffs (F) sind bereits weiter oben beschrieben. Für die Bestimmung der Tg von Bindemitteln, das heißt insbesondere der Polyester (A1) und (A2), wird folgendermaßen verfahren. Die Tg wird in Anlehnung an DIN 51005 "Thermische Analyse (TA) - Begriffe" und DIN 53765 "Thermische Analyse - Dynamische Differenzkalorimetrie (DDK)" bestimmt. Dabei wird eine Probe von 10 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung (N₂) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird in Anlehnung an DIN 53765, Punkt 8.1, diejenige Temperatur im 2. Messlauf bezeichnet, bei der die Hälfte der Änderung der spezifischen Wärmekapazität (0,5 Delta cₚ) erreicht ist. Sie wird aus dem DDK-Diagramm (Auftragung des Wärmestroms gegen die Temperatur) ermittelt und ist die Temperatur des Schnittpunkts der Mittellinie zwischen den extrapolierten Basislinien vor und nach dem Glasübergang mit der Messkurve.

Das zahlen- und gewichtsmittlere Molekulargewicht wird mittels Gelpermeationschromatographie nach DIN 55672-1 (Ausgabe 2007-08) für THF-lösliche Polymere unter Verwendung von Tetrahydrofuran (+ 0,1% Essigsäure) als Elutionsmittel über einer Styrol-Divinylbenzol-Säulenkombination (Waters HR4,HR3,HR2) bestimmt. Die Kalibrierung erfolgt mittels Polystyrol-Standards.

### Herstellbeispiel 1a:

### Synthese einer Polyesterharz-Lösung mit hoher Glasübergangstemperatur Tg (A1)

In einem Rührkessel, auf dem sich eine Kolonne mit Phasentrennbehälter zur Rückführung des Schleppmittels befindet, wird in der ersten Stufe aus 9,07 Gew.% Hydroxypivaloylsäureneopentylglykolester, 21,692 Gew.% Neopentylglykol, 11,439 Gew.% Isophthalsäure und 11,043 Gew.% Tetrahydrophthalsäureanhydrid in Gegenwart von 0,8 Gew.% Cyclohexan als Schleppmittel ein Polyester mit einer Säurezahl nach DIN EN ISO 3682 von 9,0 bis 12,0 mg KOH / g und einer Viskosität einer 70%igen Anlösung in Butylglykol von 390 bis 450 mPas synthetisiert. Die Scherrate des Viskosimeters beträgt 10000 s⁻¹. Beim Aufheizen wird darauf geachtet, dass die Kolonnenkopftemperatur 85°C nicht überschreitet.

Die so erhaltene Vorstufe wird in einer zweiten Stufe mit 6,735 Gew.% Trimellithsäureanhydrid und 3,27 Gew.% Phthalsäureanhydrid bei 180°C bis zu einer Säurezahl von 22,0 bis 25,0 mg KOH / g und einer Viskosität einer 60%igen Anlösung in Butylglykol von 700 - 1200 mPas umgesetzt.

Das Festharz wird als Schmelze in 21,273 Gew.% Naphthalin-abgereichertem Solvesso 150 gelöst und mit 14,728 Gew.% Butylglykol verdünnt. Das Endprodukt wird mit Butylglykol auf einen nfA von 59 - 61 % und eine Viskosität von 600 bis 1000 mPas eingestellt.

Das Bindemittel (Polyester A1) hat eine Glasübergangstemperatur von ca. +30°C, ein zahlenmittleres Molekulargewicht (Mn) von 2110 g/mol und ein gewichtsmittleres Molekulargewicht (Mw) von 5480 g/mol, sowie eine Hydroxylzahl von 96 mg KOH/g, bezogen auf den Festkörper (nichtflüchtigen Anteil), der nach Trocknung bei 130°C für 60 Minuten bestimmt wird.

### Herstellbeispiel 1b:

### Synthese einer Polyesterharz-Lösung mit hoher Glasübergangstemperatur Tg und zu hoher Säurezahl

In einem Rührkessel, auf dem sich eine Kolonne mit Phasentrennbehälter zur Rückführung des Schleppmittels befindet, wird in der ersten Stufe aus 8,63 Gew.-% Hydroxypivaloylsäureneopentylglykolester, 20,64 Gew.-% Neopentylglykol, 10,6 Gew.-% Isophthalsäure und 10,51 Gew.-% Tetrahydrophthalsäureanhydrid in Gegenwart von 0,8 Gew.-% Cyclohexan als Schleppmittel ein Polyester mit einer Säurezahl nach DIN EN ISO 3682 von 9,0 bis 12,0 mg KOH/g und einer Viskosität einer 70%igen Anlösung in Butylglykol von 390 bis 450 mPas synthetisiert. Die Scherrate des Viskosimeters beträgt 10000 s⁻¹. Beim Aufheizen wird darauf geachtet, dass die Kolonnenkopftemperatur 85°C nicht überschreitet.

Die Vorstufe wir in einer zweiten Stufe mit 10,41 Gew.-% Trimellithsäureanhydrid bei 180°C bis zu einer Säurezahl von 49,0 bis 54,0 mg KOH/g und einer Viskosität einer 60%igen Anlösung in Butylglykol von 700 - 1200 mPas umgesetzt.

Das Festharz wird als Schmelze in 21,273 Gew.-% Naphthalin-abgereichertem Solvesso 150 gelöst und mit 14,728 Gew.-% Butylglykol verdünnt. Das Endprodukt wird mit Butylglykol auf einen nichtflüchtigen Anteil (nfA) von 59 - 61% und eine Viskosität von 1000 bis 1300 mPas eingestellt.

Das Bindemittel hat eine Glasübergangstemperatur von ca. +40°C, ein zahlenmittleres Molekulargewicht (Mn) von 1440 g/mol und ein gewichtsmittleres Molekulargewicht (Mw) von 4650 g/mol, sowie eine Hydroxylzahl von 98 mg KOH/g, bezogen auf den Festkörper (nichtflüchtigen Anteil), der nach Trocknung bei 130°C für 60 Minuten bestimmt wird.

### Herstellbeispiel 2:

### Synthese einer Polyesterharz-Lösung mit niedriger Glasübergangstemperatur Tg (A2)

In einem Rührkessel, auf dem sich eine Kolonne mit Phasentrennbehälter zur Rückführung des Schleppmittels befindet, wird bei 220°C ein Polyester aus 7,338 Gew.% Pluriol BP40E (einem ethoxylierten Derivat von Bisphenol A mit durchschnittlich vier Ethoxygruppen von der BASF SE), 1,785 Gew.% Trimethylolpropan, 24,576 Gew.% Neopentylglykol, 19,9 Gew.% Adipinsäure und 5,912 Gew.% Timellithsäureanhydrid in Gegenwart von 0,7 Gew.% Cyclohexan als Schleppmittel bei 220°C bis zu einer Säurezahl von 8 - 12 mg KOH /g und einer Viskosität von 620 - 720 mPas synthetisiert.

Das Festharz wird in 25,994 Gew. Solvesso 100 gelöst und unterhalb von 100°C mit 6,45 Gew. Butylglykolacetat verdünnt. Die Polyester-Lösung wird mit Solvesso 100 eingestellt auf einen nfA von 64 - 66 % und eine Viskosität von 1.600 - 2.100 mPas, gemessen bei einer Scherrate des Viskosimeters von 2.500 s⁻¹.

Die Glasübergangstemperatur beträgt ca. -15°C. Das zahlenmittlere Molekulargewicht (Mn) beträgt 2730 g/mol. Das gewichtsmittlere Molekulargewicht (Mw) beträgt 22000 g/mol. Die Hydroxylzahl beträgt 84 mg KOH/g, bezogen auf den Festkörper (nichtflüchtigen Anteil), der nach Trocknung bei 130°C für 60 Minuten bestimmt wird.

### Beschichtungsstoffe: Beispiel 1, Beispiel 2 und Vergleichsbeispiele V1 und V2

Es werden zwei Beschichtungsstoffe (F), die den Kriterien der Erfindung entsprechen (Beispiel 1, Beispiel 2), sowie zwei nicht erfindungsgemäße Beschichtungsstoffe (Vergleichsbeispiele V1 und V2) gemäß der folgenden Tabelle hergestellt:

| | **Vergleichsbeispiel V1** | **Beispiel 1** | **Beispiel 2** | **Vergleichsbeispiel V2** |
|---|---|---|---|---|
| Polyester aus Herstellbeispiel 2 | 14,00 | 14,00 | 14,00 | 14,00 |
| Epoxidharzlösung | 3,00 | 3,00 | 3,00 | 3,00 |
| Rheologie-Additiv | 3,50 | 3,50 | 3,50 | 3,50 |
| Dispergierhilfsmittel | 0,10 | 0,10 | 0,10 | 0,10 |
| Aerosil R 972 | 0,26 | 0,26 | 0,26 | 0,26 |
| Flammruß | 0,10 | 0,10 | 0,10 | 0,10 |
| Titan Rutil R-706 | 7,00 | 7,00 | 7,00 | 7,00 |
| Blanc Fixe Micro | 18,00 | 18,00 | 20,00 | 20,00 |
| Butylglykolacetat | 5,30 | 5,30 | 5,30 | 5,30 |
| Das Mahlgut wird in der oben vorgegebenen Reihenfolge eingewogen und 180 min mittels eines geeigneten Dissolvers vordispergiert. Dispergiert wird anschliessend auf einer der Ansatzgröße entsprechend geeigneten Rührwerksmühle. Mahlkörper: 0,6 - 0,8 mm Jyoti, Füllgrad 80%. Die Mahlguttemperatur soll im Bereich von 50 bis 70°C liegen (anpassen mit Durchsatz und Kühlung). Es soll mindestens ein Energieeintrag von 0,10 kWh pro kg Mahlgut eingebracht und die Feinheit von 12 bis 15 Mikrometern (Hegmann-Keil bis 25 Mikrometer) erreicht werden. Das Mahlgut wird in einer letzten Mühlenpassage über Filter (Pong 10 Mikrometer) in den Komplettiermischer abgelassen. Es wird wie folgt komplettiert: | | | | |
| Polyester aus Herstellbeispiel 2 | 16,00 | -- | -- | -- |
| Polyester aus Herstellbeispiel 1a | -- | 16,00 | 17,00 | -- |
| Polyester aus Herstellbeispiel 1b | -- | -- | -- | 17,00 |
| Epoxidharzlösung | 4,00 | 4,00 | 8,50 | 8,50 |
| Desmodur BL 4265, 65% SN | 2,50 | 2,50 | 4,50 | 4,50 |
| Desmodur BL 3175, 75% SN | 8,00 | 8,00 | 4,00 | 4,00 |
| Luwipal B 017, 86%B | 3,00 | 3,00 | 2,50 | 2,50 |
| Luwipal 018 BX, 70% B/X | 3,00 | 3,00 | -- | -- |
| Resimene HM 2608, 90% IB | -- | -- | 3,00 | 3,00 |
| Verlaufmittel 1 (1%ige Silikonöl-Lösung) | 0,10 | 0,10 | 0,10 | 0,10 |
| Verlaufmittel 2 (10%ige Polyacrylat-Lösung) | 0,30 | 0,30 | 0,30 | 0,30 |
| Butanol | 1,00 | 1,00 | 2,00 | 2,00 |
| Butyldiglykolacetat | -- | -- | 1,00 | 1,00 |
| Butylacetat 98-100% | -- | -- | 3,00 | 3,00 |
| Solventnaphtha 160/180 | 8,84 | 8,84 | 0,84 | 0,84 |
| Xylol | 2,00 | 2,00 | -- | -- |

| Filtern über Nadelfilzbeutel 150/25/10 Mikrometer | | | | |
|---|---|---|---|---|
| Summe | 100,00 | 100,00 | 100,00 | 100,00 |

Angegeben sind jeweils Gewichtsteile. Bei der Epoxidharzlösung handelt es sich um eine 60%-ige Anlösung eines Epoxidharzes mit einem Epoxidäquivalentgewicht zwischen 475 und 505 g/mol in einer Mischung aus Xylol und Butylglykolacetat im Verhältnis 3:1.

Die Beschichtungsstoffe wiesen die folgenden Glasübergangstemperaturen Tg auf:

| | **Vergleichsbeispiel V1** | **Beispiel 1** | **Beispiel 2** | **Vergleichsbeispiel V2** |
|---|---|---|---|---|
| Tg | 35°C | 43°C | 58°C | 58°C |

### Lagerstabilität der Beschichtungsstoffe aus den Beispielen 1, 2, V1 und V2

Die Lagerstabilität der hergestellten Beschichtungsstoffe wurde durch Vergleich von
a) der Anfangsviskosität unmittelbar nach der Herstellung des Beschichtungsstoffs mit b) der Endviskosität nach 4-wöchiger Lagerung bei 40°C bestimmt. Die Viskosität wird gemessen mit einem Afnor-Auslaufbecher (4 mm) bei 23°C (Angabe in Sekunden).

Die Beschichtungsstoffe wiesen die folgenden Anfangs- und Endviskositäten auf:

| | **Vergleichsbeispiel V1** | **Beispiel 1** | **Beispiel 2** | **Vergleichsbeispiel V2** |
|---|---|---|---|---|
| **Anfangsviskosität nach Herstellung [s]** | 60,0 | 61,0 | 60,0 | 59,0 |
| **Endviskosität nach 4 Wochen bei 40°C [s]** | 74,0 | 95,0 | 98,0 | 150,0 |

Die Beschichtungsstoffe aus den Beispielen 1 und 2 weisen gegenüber dem Vergleichsbeispiel V2 eine deutlich bessere Lagerstabilität auf.

### Herstellung von Mehrschicht-Beschichtungen

Aus den Beschichtungsstoffen des Beispiels 1, des Beispiels 2, des Vergleichsbeispiels V1 und des Vergleichsbeispiels V2 werden Mehrschicht-Beschichtungen wie folgt hergestellt:

Auf das mit einer Elektrotauchlackierung (Cathoguard® 500) versehene Metall-Substrat wird der Beschichtungsstoff gemäß Beispiel 1, Beispiel 2, Vergleichsbeispiel 1 oder Vergleichsbeispiel 2 jeweils durch Spritzen in einer Trockenfilmschichtdicke von 45 Mikrometern aufgebracht, für 5 min bei 20°C ablüften gelassen und bei 30°C für 150 min gehärtet, bevor ein handelsüblicher Wasserbasislack und ein handelsüblicher Einkomponenten-Klarlack als weitere Schichten (60 - 65 Mikrometer) aufgetragen und gemeinsam bei 130°C für 30 min gehärtet werden.
Anschließend wurde die Lackierung mit einem Xenotest 1200 CPS-Gerät der Firma Atlas gemäß einer Kunden-Spezifikation bei 50 ± 3 °C und erhöhter Luftfeuchtigkeit sowie UV-Bestrahlung mit einer Xenonlampe (290 nm, 60 ± 3 W/m²) einem Bewitterungstest unterzogen.

### Eigenschaften der Mehrschicht-Beschichtungen

### 1) Vogelkot-Beständigkeit nach einer Kunden-Spezifikation

Auf die nach der Bewitterung erhaltenen Mehrschicht-Beschichtungen wird als Testmaterial eine Lösung von Gummi Arabicum (50% in deionisiertem Wasser) an jeweils mindestens drei Meßstellen mit einem Durchmesser von je 2 cm und einer Auftragmenge von 3 Tropfen Gummi-Arabicum-Lösung pro Meßstelle aufgetragen und 30 min bei Raumtemperatur trocknen gelassen.
Die so präparierten Lackierungen werden 3 Tage lang bei 60°C im Ofen inkubiert. Danach wird die Gummi-Arabicum-Lösung unter fließendem, 60-65°C warmem Wasser entfernt und die Lackierung für 30 min bei Raumtemperatur trocknen gelassen.
Anschließend wird die Adhäsion der Lackschichten mittels Tesafilm-Abriß überprüft. Dazu wird ein Stück Klebeband (z.B. Tesafilm) auf die Meßstelle aufgedrückt und mittels einer schnellen Bewegung wieder abgerissen.

Die Auswertung erfolgt visuell nach folgenden Kriterien:
0 = keine Defekte
1 = kleine Risse
2 = Risse und geringfügiger Adhäsionsverlust
3 = Risse und Adhäsionsverlust
4 = starker Adhäsionsverlust
5 = äußerst starker Adhäsionsverlust.

Es wird ein Durchschnittswert über alle Messstellen einer Lackierung gebildet.

### 2) Mikroeindringhärte

Nach der Bewitterung wurde die Mikroeindringhärte (Universalhärte; Martens-Härte) bei 25,6 mN nach DIN EN ISO 14577 bestimmt.

### 3) Steinschlagfestigkeit

Nach der Bewitterung wurde die Steinschlagfestigkeit gemäß einer Kunden-Spezifikation (Multisteinschlag mit 2 x 500 g bei 2 bar; anschließender Tesafilmabriß) bestimmt. Die Beurteilung erfolgt visuell nach Größe und Anzahl der Schadstellen und wird mit Noten auf einer Skala von 0 (keine Schadstellen) bis 8 (sehr viele, große Schadstellen) angegeben.

Die Mehrschicht-Beschichtungen zeigten folgende Ergebnisse:

| | **Vergleichsbeispiel V1** | **Beispiel 1** | **Beispiel 2** | **Vergleichsbeispiel V2** |
|---|---|---|---|---|
| **Vogelkot-Beständigkeit** | 2,0 | 1,5 | 1,2 | 1,2 |
| **Mikroeindringhärte in [N/mm²]** | 145 | 222 | 262 | 251 |
| **Steinschlagfestigkeit** | 2,0 | 2,0 | 2,0 | 2,0 |

Die erhaltenen Ergebnisse zeigen deutlich, dass die erfindungsgemäßen Mehrschicht-Beschichtungen (hergestellt unter Verwendung der Beschichtungsstoffe aus den Beispielen 1 und 2) eine gegenüber dem Vergleichsbeispiel V1 verbesserte Mikroeindringhärte und eine verbesserte Vogelkot-Beständigkeit bei gleichbleibend guter Steinschlagfestigkeit aufweisen.

## Patentansprüche

1. Verfahren zur Herstellung einer Mehrschicht-Beschichtung, umfassend die Schritte
i) Aufbringen einer Füllerschicht (I) auf ein gegebenenfalls vorbehandeltes Substrat,
ii) Härten der Füllerschicht (II),
iii) Aufbringen einer Basislackschicht (II) auf die gehärtete Füllerschicht (I),
iv) gegebenenfalls Härten der Basislackschicht (II),
v) Aufbringen einer Klarlackschicht (III) auf die gehärtete oder ungehärtete Basislackschicht (II), und
vi) Härten der Klarlackschicht (III) oder der Basislack- und der Klarlackschicht, falls die Basislackschicht noch nicht in Schritt iv) gehärtet wurde,
**dadurch gekennzeichnet, dass** die Füllerschicht (I) durch Aufbringen eines nicht-wässrigen, lösemittelhaltigen Beschichtungsstoffs (F) erhalten wird, der
mindestens 20 Gew.-%, bezogen auf den gesamten Beschichtungsstoff (F), mindestens eines organischen Lösemittels sowie
A1) mindestens 8 Gew.-%, bezogen auf den gesamten Beschichtungsstoff (F), mindestens eines ersten Polyesters (A1) mit einer Glasübergangstemperatur von mindestens 20°C und einer Säurezahl von 0 bis 40 mg KOH/g,
A2) mindestens 8 Gew.-%, bezogen auf den gesamten Beschichtungsstoff (F), mindestens eines zweiten, von (A1) verschiedenen Polyesters (A2) mit einer Glasübergangstemperatur von höchstens 10°C,
B) mindestens einen Vernetzer (B), und
C) mindestens 8 Gew.-%, bezogen auf den gesamten Beschichtungsstoff (F), eines oder mehrerer Füllstoffe und/oder Pigmente (C) enthält.

2. Verfahren nach Anspruch 1, **dadurch gekennzeichnet, dass** das gegebenenfalls vorbehandelte Substrat ein metallisches Substrat ist.

3. Verfahren nach einem der Ansprüche 1 oder 2, **dadurch gekennzeichnet, dass** das gegebenenfalls vorbehandelte Substrat eine Automobilkarosserie oder ein Teil davon ist.

4. Mehrschicht-Beschichtung, erhältlich nach dem Verfahren gemäß Anspruch 1.

5. Mehrschicht-Beschichtung nach Anspruch 4, **dadurch gekennzeichnet, dass** die Glasübergangstemperatur des Beschichtungsstoffs (F) mindestens 35°C beträgt.

6. Mehrschicht-Beschichtung nach einem der Ansprüche 4 oder 5, **dadurch gekennzeichnet, dass** der Beschichtungsstoff (F) ein Gewichtsverhältnis von Polyester (A1) zu Polyester (A2) von 0,7 bis 1,2 aufweist.

7. Mehrschicht-Beschichtung nach einem oder mehreren der Ansprüche 4 bis 6, **dadurch gekennzeichnet, dass** der Polyester (A1) eine Säurezahl von 0 bis 30 mg KOH/g aufweist.

8. Mehrschicht-Beschichtung nach einem oder mehreren der Ansprüche 4 bis 7, **dadurch gekennzeichnet, dass** die Polydispersität (Mw/Mn) des ersten Polyesters (A1) bei 5 oder darunter, und die Polydispersität (Mw/Mn) des zweiten Polyesters (A2) bei 5 oder darüber liegt.

9. Mehrschicht-Beschichtung nach einem oder mehreren der Ansprüche 4 bis 8, **dadurch gekennzeichnet, dass** der oder die Vernetzer (B) ausgewählt sind aus der Gruppe bestehend aus blockierten Polyisocyanaten, Melamin-Formaldehyd-Harzen und Benzoguanamin-Formaldehyd-Harzen.

10. Mehrschicht-Beschichtung nach einem oder mehreren der Ansprüche 4 bis 9, **dadurch gekennzeichnet, dass** der Beschichtungsstoff (F) mindestens ein blockiertes Isocyanat und mindestens ein Aminoplastharz als Vernetzer (B) enthält.

11. Mehrschicht-Beschichtung nach einem oder mehreren der Ansprüche 4 bis 10, **dadurch gekennzeichnet, dass** der Beschichtungsstoff (F) ein Gewichtsverhältnis von Füllstoffen und/oder Pigmenten (C) zu Bindemitteln (A1 + A2 + B) von (C):(A1+A2 + B) = 0,5 bis 1,2 aufweist.

12. Mehrschicht-Beschichtung nach einem oder mehreren der Ansprüche 4 bis 11, **dadurch gekennzeichnet, dass** der oder die Füllstoffe und/oder Pigmente (C) ausgewählt sind aus der Gruppe bestehend aus Silikaten, Calciumcarbonaten, Calcium-Magnesium-Carbonaten, Bariumcarbonat, Ruß, Bariumsulfaten, Calciumsulfat, Aluminiumhydroxid, Magnesiumhydroxid, Titandioxid und Kieselsäuren.

13. Mit einer Mehrschicht-Beschichtung nach einem oder mehreren der Ansprüche 4 bis 12 beschichtetes Substrat.

14. Substrat nach Anspruch 13, **dadurch gekennzeichnet, dass** es sich um ein metallisches Substrat handelt.

15. Substrat nach Anspruch 13 oder 14, **dadurch gekennzeichnet, dass** es sich um eine Automobilkarosserie oder ein Teil davon handelt.

## Claims

1. Method for producing a multicoat coating, comprising the steps of
i) applying a primer-surfacer coat (I) to an optionally pretreated substrate;
ii) curing the primer-surfacer coat (II),
iii) applying a basecoat (II) to the cured primer-surfacer coat (I),
iv) optionally curing the basecoat (II),
v) applying a clearcoat (III) to the cured or uncured basecoat (II), and
vi) curing the clearcoat (III) or the basecoat and the clearcoat if the basecoat was not cured in step iv),
**characterized in that** the primer-surfacer coat (I) is obtained by applying a nonaqueous, solventborne coating material (F) comprising
at least 20% by weight, based on the total coating material (F), of at least one organic solvent, and also
A1) at least 8% by weight, based on the total coating material (F), of at least one first polyester (A1), having a glass transition temperature of at least 20°C and an acid number of 0 to 40 mg KOH/g,
A2) at least 8% by weight, based on the total coating material (F), of at least one second polyester (A2), different from (A1) and having a glass transition temperature of not more than 10°C,
B) at least one crosslinker (B), and
C) at least 8% by weight, based on the total coating material (F), of one or more fillers and/or pigments (C).

2. Method according to Claim 1, **characterized in that** the optionally pretreated substrate is a metallic substrate.

3. Method according to either of Claims 1 and 2, **characterized in that** the optionally pretreated substrate is an automobile body or a part thereof.

4. Multicoat, coating obtainable by the method according to Claim 1.

5. Multicoat coating according to Claim 4, **characterized in that** the glass transition temperature of the coating material (F) is at least 35°C.

6. Multicoat coating according to either of Claims 4 and 5, **characterized in that** the coating material (F) has a weight ratio of polyester (A1) to polyester (A2) of 0.7 to 1.2.

7. Multicoat coating according to one or more of Claims 4 to 6, **characterized in that** the polyester (A1) has an acid number of 0 to 30 mg KOH/g.

8. Multicoat coating according to one or more of Claims 4 to 7, **characterized in that** the polydispersity (Mw/Mn) of the first polyester (A1) is 5 or below, and the polydispersity (Mw/Mn) of the second polyester (A2) is 5 or above.

9. Multicoat coating according to one or more of Claims 4 to 8, **characterized in that** the crosslinker or crosslinkers (B) are selected from the group consisting of blocked polyisocyanates, melamine-formaldehyde resins and benzoguanamine-formaldehyde resins.

10. Multicoat coating according to one or more of Claims 4 to 9, **characterized in that** the coating material (F) comprises at least one blocked isocyanate and at least one amino resin as crosslinker (B).

11. Multicoat coating according to one or more of Claims 4 to 10, **characterized in that** the coating material (F) has a weight ratio of fillers and/or pigments (C) to binders (A1 + A2 + B) of (C):(A1 + A2 + B) = 0.5 to 1.2.

12. Multicoat coating according to one or more of Claims 4 to 11, **characterized in that** the filler or fillers and/or pigment or pigments (C) are selected from the group consisting of silicates, calcium carbonates, calcium magnesium carbonates, barium carbonate, carbon black, barium sulfates, calcium sulfate, aluminum hydroxide, magnesium hydroxide, titanium dioxide and silicas.

13. Substrate coated with a multicoat coating according to one or more of Claims 4 to 12.

14. Substrate according to Claim 13, **characterized in that** it is a metallic substrate.

15. Substrate according to Claim 13 or 14, **characterized in that** it is an automobile body or part thereof.

## Revendications

1. Procédé de fabrication d'un revêtement multicouche, comprenant les étapes :
i) application d'une couche d'un apprêt garnissant (I) sur un subjectile éventuellement prétraité,
ii) durcissement de la couche de l'apprêt garnissant (II),
iii) application d'une couche de vernis de base (II) sur la couche de l'apprêt garnissant (I) durci,
iv) éventuellement, durcissement de la couche de vernis de base (II),
v) application d'une couche de vernis transparent (III) sur la couche de vernis de base (II) durcie ou non durcie, et
vi) durcissement de la couche de vernis transparent (III) ou de la couche de vernis de base et de la couche de vernis transparent, dans le cas dans lequel la couche de vernis de base n'aurait pas encore durci dans l'étape iv),
**caractérisé en ce que** la couche de l'apprêt garnissant (I) est obtenue par application d'une composition de revêtement (F) non aqueuse, contenant des solvants, qui contient
au moins 20 % en poids, par rapport à la totalité de la composition de revêtement (F), 'd'au moins un solvant organique, ainsi que
A1) au moins 8 % en poids, par rapport à la totalité de la composition de revêtement (F), d'au moins un premier polyester (A1) ayant une température de transition vitreuse d'au moins 20°C, et un indice d'acide de 0 à 40 mg KOH/g,
A2) au moins 8 % en poids, par rapport à la totalité de la composition de revêtement (F), d'au moins un deuxième polyester (A2), différent de (A1), ayant une température de transition vitreuse d'au plus 10°C,
B) au moins un agent de réticulation (B), et
C) au moins 8 % en poids, par rapport à la totalité de la composition de revêtement (F), d'une ou plusieurs matières de charge et/ou d'un ou plusieurs pigments (C).

2. Procédé selon la revendication 1, **caractérisé en ce que** le subjectile éventuellement prétraité est un subjectile métallique.

3. Procédé selon l'une des revendications 1 ou 2, **caractérisé en ce que** le subjectile éventuellement prétraité est une carrosserie d'automobile ou une partie de cette dernière.

4. Revêtement multicouche, pouvant être obtenu par le procédé selon la revendication 1.

5. Revêtement multicouche selon la revendication 4, **caractérisé en ce que** la température de transition vitreuse de la composition de revêtement (F) est d'au moins 35°C.

6. Revêtement multicouche selon l'une des revendications 4 ou 5, **caractérisé en ce que** la composition de revêtement (F) présente un rapport en poids du polyester (A1) au polyester (A2) de 0,7 à 1,2.

7. Revêtement multicouche selon l'une ou plusieurs des revendications 4 à 6, **caractérisé en ce que** le polyester (A1) présente un indice d'acide de 0 à 30 mg KOH/g.

8. Revêtement multicouche selon l'une ou plusieurs des revendications 4 à 7, **caractérisé en ce que** la polydispersité (Mw/Mn) du premier polyester (A1) est de 5 ou moins, et que la polydispersité (Mw/Mn) du deuxième polyester (A2) est de 5 ou plus.

9. Revêtement multicouche selon l'une ou plusieurs des revendications 4 à 8, **caractérisé en ce que** le ou les agents de réticulation sont choisis dans le groupe consistant en les polyisocyanates bloqués, les résines de mélamine-formaldéhyde et les résines de benzoguanamine-formaldéhyde.

10. Revêtement multicouche selon l'une ou plusieurs des revendications 4 à 9, **caractérisé en ce que** la composition de revêtement (F) continent au moins un isocyanate bloqué et au moins une résine aminoplaste en tant qu'agent de réticulation (B).

11. Revêtement multicouche selon l'une ou plusieurs des revendications 4 à 10, **caractérisé en ce que** la composition de revêtement (F) présente un rapport en poids des matières de charge et/ou des pigments (C) aux liants (A1 + A2 + B) de (C):(A1+A2+B)=0,5 à 1,2.

12. Revêtement multicouche selon l'une ou plusieurs des revendications 4 à 11, **caractérisé en ce que** la ou les matières de charge et/ou les pigments (C) sont choisis dans le groupe consistant en les silicates, les carbonates de calcium, les carbonates de calcium et de magnésium, le carbonate de baryum, le noir de carbone, les sulfates de baryum, le sulfate de calcium, l'hydroxyde d'aluminium, l'hydroxyde de magnésium, le dioxyde de titane et les silices.

13. Subjectile revêtu d'un revêtement multicouche selon l'une ou plusieurs des revendications 4 à 12.

14. Subjectile selon la revendication 13, **caractérisé en ce qu'**il s'agit d'un subjectile métallique.

15. Subjectile selon la revendication 13 ou 14, **caractérisé en ce qu'**il s'agit d'une carrosserie d'automobile ou d'une partie de cette dernière.
